# DEMANDE DE BREVET EUROPEEN

(11) **EP 1 232 696 A1**
(43) Date de publication de la demande: **21.08.2002**
(21) Numéro de dépôt: 02290371.0
(22) Date de dépôt: 14.02.2002
(51) Int. Cl.: A23N 5/00

(54) **Procédé et dispositif pour la production de noix décortiquées et de produits analogues**

(30) Priorité: 15.02.2001 FR 0102080
(71) Demandeur: La Noix Gaillarde - Cerneaux Elabores, 19500 Turenne (FR)
(72) Inventeur: Soularue, Alain, 19100 Brive-la-Gaillarde (FR)
(74) Mandataire: Casalonga, Axel

(57) **Abrégé**

Pour le dépelliculage de cerneaux de noix décortiqués et produits analogues, on soumet les cerneaux à une surgélation telle que l'action de la surgélation se trouve essentiellement limitée à la peau des cerneaux et provoque une fragilisation de la peau des cerneaux et on soumet ensuite les cerneaux à l'action de jets d'air sous pression sous l'effet desquels la peau fragilisée est désagrégée et détachée des cerneaux.

L'installation pour la mise en oeuvre du procédé comprend un transporteur continu 1 traversant un tunnel de surgélation 2, suivi d'une enceinte 5 comportant des moyens de soufflage 12 pour souffler des jets d'air sur les cerneaux contenus dans ladite enceinte, et des moyens d'extraction 13 pour extraire de l'enceinte l'air et les débris de peau détachés des cerneaux par lesdits jets d'air.

## Description

La présente invention se rapporte à un procédé de dépelliculage de cerneaux de noix décortiqués, ainsi qu'à une installation pour la mise en oeuvre de ce procédé.

Les cerneaux de noix décortiqués sont protégés par une peau qui est très chargée en tanin et d'un goût astringent, raison pour laquelle l'utilisation des cerneaux de noix n'a pas pu s'imposer dans certaines applications. C'est ainsi, par exemple, que les cerneaux de noix comportant leur peau peuvent tacher des substances fragiles, telles que par exemple des pâtes fromagères, de la chair animale, etc.

Une possibilité pour dépelliculer les cerneaux de noix, donc les débarrasser de leur peau, consiste à éplucher manuellement les cerneaux de noix frais, ce qui nécessite toutefois une main-d'oeuvre considérable.

Il est également connu depuis longtemps de dépelliculer les cerneaux de noix par trempage dans des soudes alimentaires. Le résultat est cependant loin d'être satisfaisant, notamment du fait que les noix, en même temps, perdent en partie la fermeté de leur texture et leur goût.

Il a par ailleurs été proposé (demande de brevet FR-2 771 258) de soumettre des noix fraîches non décortiquées à une congélation à coeur, de les stocker à l'état congelé, à une température de l'ordre de -20°C pendant une période de quatre mois ou plus , de décongeler les noix, de les casser et décortiquer et d'enlever ensuite manuellement les pellicules, cet enlèvement manuel des pellicules étant censé être facilité du fait du traitement préalable.

En réalité, aucun des procédés précités ne donne entière satisfaction, en raison de l'altération des cerneaux de noix et/ou du coût.

La présente invention vise un procédé pour dépelliculer des noix, d'une manière simple et rapide, sans altération de texture ou de goût des noix.

L'invention vise par ailleurs une installation pour la mise en oeuvre de ce procédé, d'une manière automatisée, à un débit élevé et à un coût réduit.

Suivant le procédé conforme à l'invention de dépelliculage de cerneaux de noix décortiqués, on soumet les cerneaux à une surgélation de durée telle que l'action de la surgélation se trouve essentiellement limitée à la peau des cerneaux et provoque une fragilisation de la peau des cerneaux. On soumet ensuite les cerneaux à l'action de jets d'air sous pression sous l'effet desquels la peau fragilisée est désagrégée et détachée des cerneaux.

On soumet par conséquent les cerneaux à une surgélation rapide qui, de préférence, n'affecte pas les cerneaux à coeur.

On peut avantageusement produire la surgélation par pulvérisation d'azote liquide sur les cerneaux de noix, en limitant la durée de surgélation à une minute au maximum.

De préférence, on soumet les cerneaux de noix à l'action des jets d'air alors que les peaux sont encore surgelées et de préférence immédiatement à la suite de la surgélation.

Pour cela, on peut avantageusement faire passer les cerneaux de noix successivement dans un tunnel de surgélation et dans une enceinte contenant des buses produisant des jets d'air agissant sur les cerneaux de noix dans ladite enceinte.

En vue d'une action uniforme des jets d'air sur les cerneaux de noix, on fait agir les jets d'air depuis le bas dans ladite enceinte de manière que les cerneaux subissent un brassage dans ladite enceinte et on extrait les fragments de peau détachés des cerneaux vers le haut de ladite enceinte.

De préférence, on fait passer les cerneaux de noix de façon séquentielle dans ladite enceinte.

L'installation pour la mise en oeuvre de ce procédé comprend un transporteur continu traversant un tunnel de surgélation, suivi d'une enceinte comportant des moyens de soufflage pour souffler des jets d'air sur les cerneaux de noix contenus dans ladite enceinte et des moyens d'extraction pour extraire de ladite enceinte l'air et les débris de peau détachés des cerneaux de noix par lesdits jets d'air.

De préférence, ladite enceinte peut être munie d'un fond incliné vers le bas depuis ledit transporteur, comportant dans sa portion d'extrémité basse au moins une buse de soufflage d'air dirigée vers le haut, et de moyens d'extraction d'air situés à distance au-dessus dudit fond.

Suivant un mode de réalisation préféré, ladite enceinte présente la forme d'un tube incliné comportant une porte à son extrémité basse, au moins une buse de soufflage en partie inférieure dudit tube, en amont de ladite porte, et des moyens d'extraction d'air en amont de ladite buse, en partie supérieure dudit tube.

La buse de soufflage peut avantageusement déboucher dans le tube de manière à souffler le jet d'air avec une composante tangentielle dans ledit tube.

De préférence, le tube peut comporter, en amont des moyens d'extraction d'air, une porte divisant le tube en une zone amont d'accumulation des cerneaux de noix acheminés par le transporteur continu, et en une zone aval de traitement séquentiel des cerneaux de noix par jets d'air.

En se référant aux dessins schématiques annexés, on va décrire ci-après plus en détail un mode de réalisation illustratif et non limitatif de l'invention; sur les dessins :
- la figure 1 est une vue latérale schématique d'une installation pour la mise en oeuvre du procédé conforme à l'invention;
- la figure 2 est une coupe suivant II-II de la figure 1, à plus grande échelle.

L'installation illustrée par les dessins pour le dépelliculage de cerneaux de noix décortiqués ou de produits analogues, comprend un transporteur continu 1 constitué ici par un tapis transporteur qui traverse un tunnel de surgélation 2 dans lequel des buses 3 disposées au-dessus du transporteur 1 pulvérisent de l'azote liquide (à -120°C) sur les cerneaux de noix véhiculés par le transporteur 1. La vitesse du transporteur 1 est choisie de manière que les cerneaux de noix subissent ainsi, en l'espace d'une minute au maximum, une surgélation essentiellement limitée à la peau des cerneaux de noix.

Le tunnel 2 est suivi d'une chambre 4, dans laquelle est installée une enceinte 5 réalisée sous la forme d'un tube 6 cylindrique dont l'axe est incliné vers le bas depuis l'extrémité de décharge du transporteur 1 à la sortie du tunnel 2. Le tube 6 comporte, entre ses deux extrémités, une porte 7 mobile en translation verticale sous l'action d'un moyen de commande non représenté, à la manière d'une guillotine, divisant l'espace intérieur du tube 6 en une zone amont 8 d'accumulation et en une zone aval 9 de traitement. L'extrémité inférieure du tube 6 comporte une porte 10 susceptible d'être manoeuvrée par des moyens de commande non représentés, en l'occurence une porte 10 pivotant autour d'un axe d'articulation 11 horizontal disposé au-dessus du tube 6.

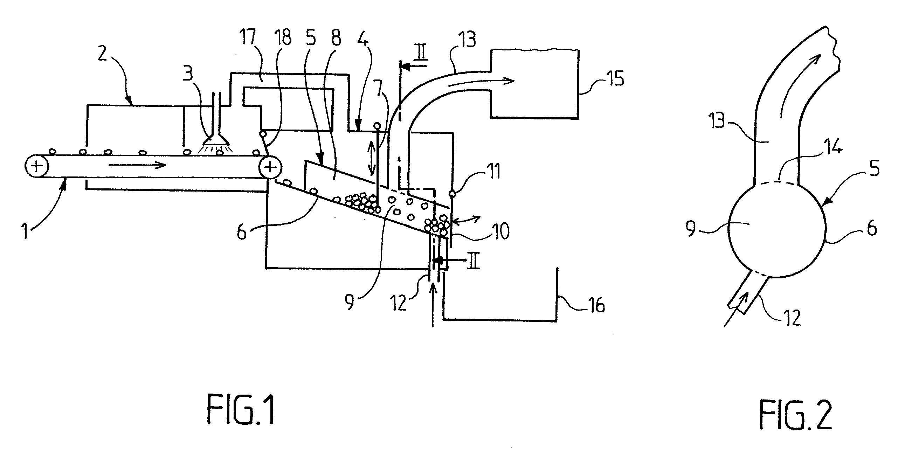

Le tube 6 comporte, dans la zone 9, à proximité en amont de la porte 10, une buse 12 de soufflage d'air par laquelle un jet d'air peut être soufflé dans la zone 9 du tube 6. Tel que cela apparaît sur la figure 2, la buse de soufflage 12 disposée en partie inférieure du tube 6 est orientée de manière à souffler le jet d'air dans le tube 6 avec une composante tangentielle, donc avec une composante de rotation.

Le tube 6 comporte, par ailleurs, à proximité en aval de la porte 7, en partie supérieure du tube, une tubulure d'extraction 13 qui se raccorde au tube 7 par une grille 14 (voir figure 2) et qui débouche dans un collecteur 15 auquel est raccordé un ventilateur d'extraction non représenté.

Un récipient 16 est disposé à la suite de la chambre 4, en dessous de la porte 10, de manière à pouvoir récupérer les cerneaux de noix débarrassés de leur peau, tombant du tube 6 lorsque la porte 10 est ouverte.

Il convient encore de remarquer que la chambre 4 communique en partie haute avec le tunnel de congélation 2, par une canalisation 17, un volet 18 installé au-dessus du transporteur 1 empêchant toutefois une communication directe au niveau du transporteur 1.

Les cerneaux de noix destinés à être dépelliculés dans l'installation décrite précédemment sont chargés sur le transporteur 1, par exemple au fur et à mesure que les noix sont cassées et décortiquées. Il peut s'agir là, soit de noix fraîches, soit de noix sèches.

Dans le tunnel de congélation 2, les cerneaux de noix subissent une surgélation brutale essentiellement limitée à la superficie des cerneaux, donc à leur peau. Cette surgélation provoque une fragilisation de la peau, sans affecter la texture et le goût du fruit.

Les cerneaux de noix surgelés en surface sont déversés par le transporteur 1 dans l'enceinte 5 dans laquelle, du fait de l'inclinaison du tube 6 constituant l'enceinte 5, et du fait de la présence de la porte 7, les cerneaux sont accumulés dans la zone 8 au fur et à mesure de leur arrivée. Il est à noter que la température dans la chambre 4 est telle que les cerneaux de noix ne dégèlent pas.

La porte 7 est commandée de façon séquentielle de manière que lorsqu'une certaine quantité de cerneaux de noix se trouve accumulée dans la zone 8, l'ouverture de la porte 7 permet à ces cerneaux de passer dans la zone 9, la porte 10 étant fermée. Sous l'effet du ou des jets d'air sortant de la buse 12, les cerneaux de noix subissent un effet de brassage dans la zone 9 pendant que sous l'action des jets d'air sous pression, la peau fragilisée par la surgélation est désagrégée et détachée des cerneaux. Les fragments de peau détachés des cerneaux sont extraits, avec l'air, de la zone 9 par la tubulure 13, les fragments de peau étant récupérés dans le collecteur 15.

Après un traitement d'une durée de moins d'une minute, par exemple d'une quinzaine de secondes, des cerneaux de noix dans la zone 9, par l'action des jets d'air, la porte 11 est ouverte, ce qui permet de décharger les cerneaux de noix, débarrassés de leur peau, dans le récipient 16.

Pendant le traitement d'une charge de cerneaux dans la zone 9, de nouveaux cerneaux provenant du tapis 1 se sont accumulés dans la zone 8, devant la porte 7 fermée, et l'ouverture de la porte 7, après refermeture de la porte 11, permet ensuite de recommencer un cycle de traitement dans la zone 9.

Il convient de remarquer que le mode de réalisation représenté et décrit de l'installation conforme à l'invention, n'a été donné qu'à titre d'exemple illustratif et que d'autres modes de réalisation sont concevables pour mettre en oeuvre le procédé de dépelliculage par la combinaison d'une surgélation limitée provoquant une fragilisation des peaux et de l'action de jets d'air sous pression pour désagréger et détacher la peau ainsi fragilisée.

Par ailleurs, le procédé peut être mis en oeuvre, non seulement pour des cerneaux de noix, mais également pour débarrasser d'autres noix et graines de leur peau, en particulier dans le cas de graines de forme tourmentée dont le dépelliculage ne peut pas se faire par des moyens mécaniques classiques.

## Revendications

1. Procédé de dépelliculage de cerneaux de noix décortiqués et produits analogues, **caractérisé par le fait qu'**on soumet les cerneaux à une surgélation de durée telle que l'action de la surgélation se trouve essentiellement limitée à la peau des cerneaux et provoque une fragilisation de la peau des cerneaux et qu'on soumet ensuite les cerneaux, avant que leur peau ne soit dégelée, à l'action de jets d'air sous pression sous l'effet desquels la peau fragilisée est désagrégée et détachée des cerneaux.

2. Procédé suivant la revendication 1, **caractérisé par le fait qu'**on produit la surgélation par pulvérisation d'azote liquide sur les cerneaux et qu'on limite la durée de surgélation à une minute au maximum.

3. Procédé suivant la revendication 1 ou 2, **caractérisé par le fait qu'**on soumet les cerneaux à l'action des jets d'air immédiatement à la suite de la surgélation.

4. Procédé suivant la revendication 3, **caractérisé par le fait qu'**on fait passer les cerneaux successivement dans un tunnel de surgélation et dans une enceinte contenant des buses produisant des jets d'air agissant sur les cerneaux dans ladite enceinte.

5. Procédé suivant la revendication 4, **caractérisé par le fait qu'**on fait agir les jets d'air sur les cerneaux depuis le bas dans ladite enceinte pour faire subir aux cerneaux un brassage dans l'enceinte et qu'on extrait l'air avec les fragments de peau détachés des cerneaux vers le haut de ladite enceinte.

6. Procédé suivant la revendication 4 ou 5, **caractérisé par le fait qu'**on fait passer les cerneaux de façon séquentielle dans ladite enceinte.

7. Installation pour la mise en oeuvre du procédé suivant l'une quelconque des revendications précédentes, **caractérisée par le fait qu'**elle comprend un transporteur continu (1) traversant un tunnel de surgélation (2), suivi d'une enceinte (5) comportant des moyens de soufflage (12) pour souffler des jets d'air sur les cerneaux contenus dans ladite enceinte et des moyens d'extraction (13) pour extraire de l'enceinte l'air et les débris de peau détachés des cerneaux par lesdits jets d'air.

8. Installation suivant la revendication 7, **caractérisée par le fait que** ladite enceinte (5) est munie d'un fond incliné vers le bas depuis ledit transporteur (1), comportant dans sa portion d'extrémité basse au moins une buse (12) de soufflage d'air vers le haut, et de moyens d'extraction (13) situés à distance au-dessus dudit fond.

9. Installation suivant la revendication 8, **caractérisée par le fait que** ladite enceinte (5) présente la forme d'un tube (6) incliné comportant une porte (10) à son extrémité basse, au moins une buse de soufflage d'air (12) en partie inférieure dudit tube, en amont de ladite porte (10), et des moyens d'extraction d'air (13) en amont de ladite buse (12), en partie supérieure dudit tube.

10. Installation suivant la revendication 9, **caractérisée par le fait que** la buse (12) débouche dans le tube (6) de façon à souffler le jet d'air avec une composante tangentielle dans le tube.

11. Installation suivant la revendication 9 ou 10, **caractérisée par le fait que** le tube (6) comporte, en amont des moyens d'extraction (13), une porte (7) divisant le tube en une zone amont (8) d'accumulation des cerneaux et en une zone aval (9) de dépelliculage séquentiel des cerneaux.
